Europäisches Patentamt

European Patent Office

Office européen des brevets

(11) Publication number: 0 196 677
A2

(12) EUROPEAN PATENT APPLICATION

(21) Application number: 86104649.8

(22) Date of filing: 04.04.86

(51) Int. Cl.⁴: D 03 D 51/00
G 05 B 19/405

(30) Priority: 05.04.85 JP 71158/85

(43) Date of publication of application:
08.10.86 Bulletin 86/41

(84) Designated Contracting States:
BE CH DE FR GB IT LI

(71) Applicant: Tsudakoma Corporation
18-18, Nomachi 5-chome
Kanazawa-shi Ishikawa-ken 921(JP)

(72) Inventor: Sainen, Tsutomu
14-28, Teramachi 1-chome
Kanazawa-shi Ishikawa-ken 921(JP)

(72) Inventor: Sakano, Toshiyuki
Kosakamachi Naka 109
Kanazawa-shi Ishikawa-ken 920(JP)

(72) Inventor: Asai, Takeshi
259, Nukashinbo 3-chome
Kanazawa-shi Ishikawa-ken 921(JP)

(72) Inventor: Maenaka, Koyu
Yotsuyamachi 75
Matto-shi Ishikawa-ken 924(JP)

(74) Representative: Goddar, Heinz J., Dr. et al,
FORRESTER & BOEHMERT Widenmayerstrasse 4/I
D-8000 München 22(DE)

(54) Centralized loom control system.

(57) A centralized loom control system for controlling a group of looms (13) comprises a host CPU (1), a plurality of local CPUs (2) provided on each of the group of looms (13) to control the opeation of the associated loom (13), a plurality of communication control CPUs (3) each provided on a data bus (5) interconnecting the host CPUs (1) and the local CPUs (2) provided on each loom (13) to exchange data with both the host CPU (1) and the associated local CPUs (2), and a memory (4) connected to each communication control CPU (3) to store temporarily the data given to the associated communication control CPU (3) from the host CPU (1) and from the associated local CPUs (2). The centralized loom control system enchances the apparent data transmission speed of data transmission betweedn the host CPU and the looms to achieve the high-speed centralized control of a plurality of groups of looms.

EP 0 196 677 A2

## CENTRALIZED LOOM CONTROL SYSTEM

### DESCRIPTION

The present invention relates to a centralized control system for collectively controlling a group of a plurality of looms and, more specifically, to a centralized loom control system for collectively controlling a group of a plurality of looms each equipped with a plurality of local central processing units (hereinafter designated as "local CPUs") communicating through channels with a host CPU.

A centralized loom control method for controlling a group of a plurality of looms by a host CPU is disclosed in Unexamined Japanese Patent Publication No. 59-211658. In this known method, a host CPU gives specific commands including a stop command and a start inhibition command to the CPU of a particular loom among a group of looms each being controlled by the CPU connected through a data bus to the host CPU, and the CPU of the loom functions according to the specific commands given thereto from the host CPU.

Such a method is satisfactory even if the CPUs of the looms are connected directly through the data bus to the host CPU, as far as each CPU is required to perform only a few on-off control actions such as stopping the loom and inhibiting the operation of the loom. However, practical

1

operation for controlling an air jet loom, for instatnce, requires many data such as the revolving speed of the main motor, pick spacing, warp tention, the phase of picking nozzle actuation and picking air pressure.

Recently, the control requirements of looms have advanced highly and the cost of CPUs has been reduced, and thereby a distributed control system employing a plurality of CPUs has become prevalent. For example, recent looms are equipped with individual CPUs for let-off motion control and picking control. Moreover, there is a steady tendency for the operating speed of looms to increase, and hence high-speed control of looms has become necessary.

Direct connection of the individual CPUs of each one of a group of looms through a data bus to a host CPU to give many data to the CPUs for the quick control of the looms has several disadvantages. That is, in transmitting data directly through a data bus from a central control unit to a plurality of CPUs of each of a plurality of looms, the data needs to include a loom code and a CPU identification code to identify a particular CPU among a plurality of the CPUs to indicate the CPU to receive the data. Furthermore, the CPUs of all the looms of the group must receive the loom code and make a decision as to whether or not the data is assigned to the CPUs and also need to execute a process for confirming the received data. Accordingly, the data bus is occupied necessarily for a long time by each loom, and hence a long time is

2

required to circulate the data through all the looms of the group when the group comprises a large number of looms, which makes quick control operation impossible.

In operation inhibition control according to the above-mentioned prior art, for instance, each loom is unable to start operation even if the loom is ready to operate after the operation inhibition command has been provided, until the host CPU resumes to control the first loom after the completion of controlling all the looms. Therefore, when a large group of looms is controlled by a host CPU, the start of the looms is delayed greatly, which is a serious problem in carrying out the centralized control of the looms.

The present invention has been made in view of those disadvantages of the prior art. Accordingly, it is an object of the present invention to provide a centralized loom control system capable of achieving the quick centralized control of a large group of looms on the basis of various control data.

In one aspect of the present invention, a centralized loom control system comprises a host CPU, a plurality of local CPUs provided on each loom of a group of looms, and a communication control CPU interposed between the host CPU and plurality of local CPUs of each loom, for temporarily storing the data provided by the host CPU or by the local CPUs in a memory and thereafter transmitting

3

the stored data to the local CPUs or to the host CPU.

In another aspect of the present invention, a centralized loom control system comprises a host CPU, a plurality of local CPUs provided on each loom of a group of looms, a communication control CPU interposed between the host CPU and a plurality of the local CPUs of each loom, and a relaying CPU interposed between the host CPU and the communication control CPUs of a plurality of the looms, for temporarily storing the data provided by the host CPU or by the communication control CPU of a specified loom in a memory and thereafter interchanging data with a plurality of the associated communication CPUs or with the host CPU.

The centralized loom control system according to the present invention enhances the apparent data transmission speed of data transmission between the host CPU and the looms to achieve the high-speed centralized control of a plurality of groups of looms.

The above and other objects, features and advantages of the present invention will become more apparent from the following description of the preferred embodiments thereof when taken in conjunction with the accompanying drawings.

Figure 1 is a block diagram showing the constitution of a centralized loom control system, in a first embodiment, according to the present invention;

4

Figure 2 is a block diagram showing the configuration of a local CPU of a loom and the connection of the local CPUs, a communication control CPU and a host CPU, for feedback control;

Figure 3 is a block diagram showing the constitution of a centralized loom control system, in a second embodiment, according to the present invention;

Figure 4 is a time chart of data transmission by the centralized loom control system according to the present invention;

Figure 5 is a time chart of data transmission by a conventional centralized loom control system;

Figure 6 is a block diagram of a centralized loom control system, in a third embodiment, according to the present invention;

Figure 7 is a block diagram of the host CPU of the centralized loom control system shown in Fig. 3;

Figure 8 is a block diagram of a relaying CPU; and

Figure 9 is a block diagram of a communication control CPU.

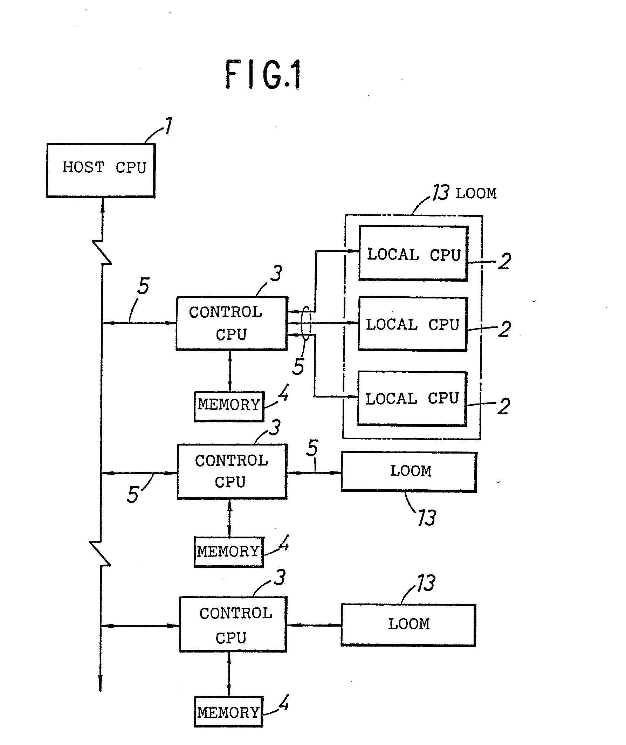

Referreing to Fig. 1, a host CPU 1 is the principal component of a centralized loom control system for controlling a plurality of looms 13. Each loom 13 is provided with a plurality of local CPUs 2 for controlling the controlled units of the loom, and the local CPUs 2 are connected to a communication control CPU 3. Each

5

communication control CPU3 is connected to a memory 4 and to the host CPU 1 through a bidirectional data bus 5.

The communication control CPU 3 stores temporarily all the various data provided by the host CPU 1 in the associated memory 4. After giving a transmission end signal to the communication control CPU 3, the host CPU selects the next communication control CPU 3 to start data transmission to the selected communication control CPU 3. The former communication control CPU 3 transmits the data stored in the memory 4 sequentially to the associated local CPUs 2 while the host CPU 1 is transmitting data to other communication control CPUs.

On the other hand, during data transmission between the host CPU and one of the communication CPUs 3, the rest of the communication control CPUs store the data given thereto from the associated local CPUs 2 in the associated memories 4, respectively. When selected, the communication control CPU 3 transmits the data stored in the memory 4 to the host CPU 1.

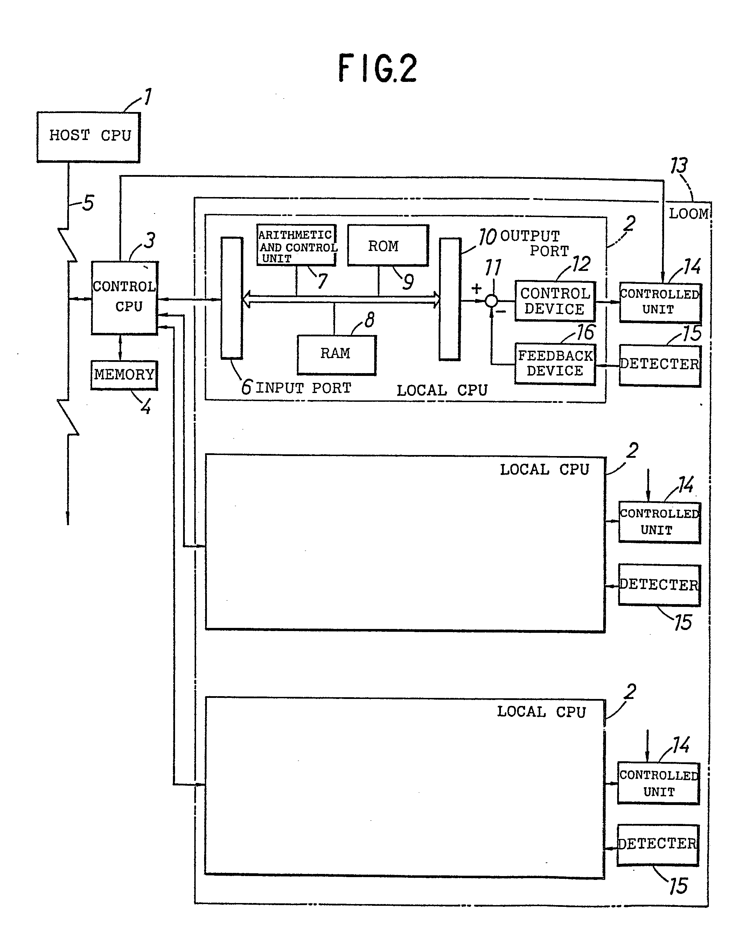

The internal constitution of the local CPU 2 for feedback control is shown in Fig. 2. In the feedback control operation, the host CPU 1 gives only target values to the communication control CPU 3 and the actual feedback control functions are executed by the individual local CPUs 2 of each loom. The local CPU 2 includes a circuit comprising an input port 6, arithmetic and control unit 7, a ROM 8, a ROM 9 and an output port 10. The communication

6

control CPU 3 transmits the target values given thereto
from the host CPU 1 to the local CPU 2, and then the local
CPU 2 stores the target values in the ROM 8. The target
values is given to a deviation detecting circuit 11, where
feedback signals provided by a feedback device 16 are
compared with the target values, respectively, to detect
the deviations of the feedback signals from the
corresponding target values, the deviations are subjected
to PID operation in a control device 12, and then the
results of the PID operation is given to the controlled
units 14 of the loom 13. The results of control of the
controlled units 14 of the loom 13 are detected by a
detector 15 and the results of detection is given through
the feedback device 16 to the deviation detecting circuit
11. In this embodiment, the deviation detecting circuit
11, the control device 12 and the feedback device 16 are
regarded as functional devices separate from the control
unit 7, however, these devices may be included in control
unit 7.

In the case of open-loop control, the signal system
including the feedback device 16 of Fig. 2 is omitted. In
this case, the host CPU 1 gives the communication control
CPU 3 only control conditions of the loom 13, and the
communication control CPU 3 transmits the control
conditions to the local CPUs 2. The local CPU 2 controls
the associated loom 13 on the basis of the control
conditions given thereto. It is also possible to give

7

control commands directly from the communication control CPU 3 to the controlled units 14 of the loom 13 by skipping the local CPU 2.

For example, when the communication control CPU 3 or the local CPU 2 is provided with a timing function, the host CPU 1 gives only a time correction signal and an operation stop time to the communication control CPU 3, and then, the communication control CPU 3 or the local CPU 2 compares the actual time and the operation stop time and provides an operation stop signal to stop the loom 13. In the operation inhibition control, the host CPU 1 gives previously operation inhibiting conditions to the communication control CPUs 3, the communication control CPU 3 or the local CPUs 2 continuously monitor the actual operating condition of the looms 13, and make a decision as to whether or not the actual operating condition of the looms 13 coincides with the operation inhibiting conditions, for the on-off control of the operation inhibition command.

When the feedback control operation and the open-loop control operation are assigned to the communication control CPU 3 or to the local CPUs 2, the load on the host CPU 1 is reduced accordingly, and hence high-speed centralized control of a plurality of the looms 13 is possible.

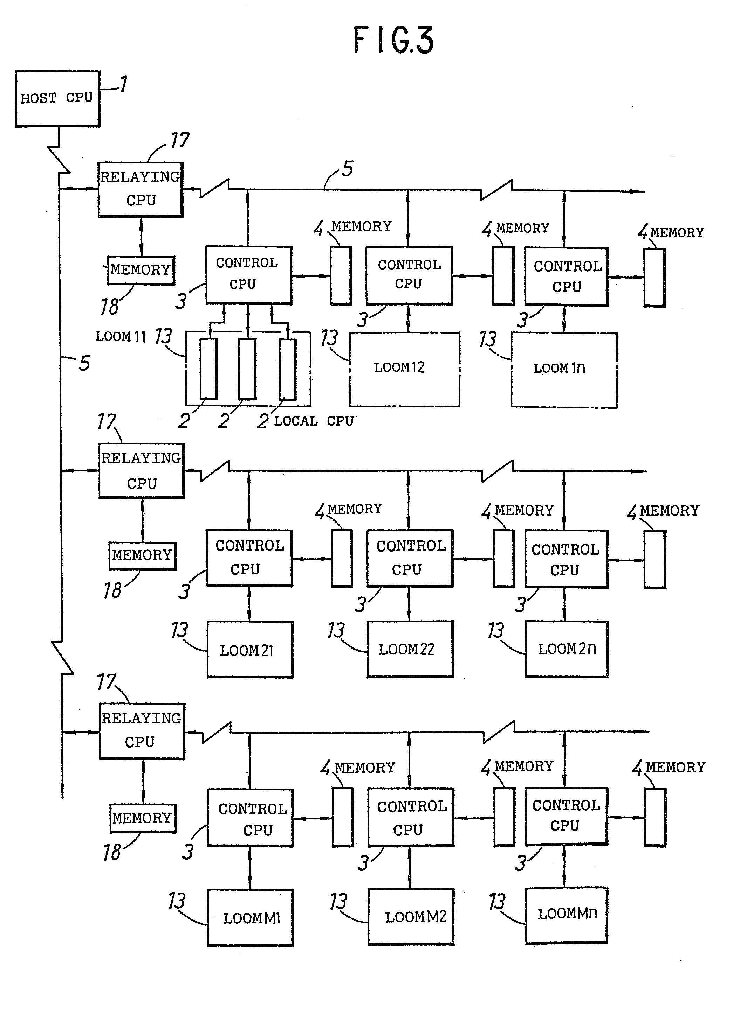

Fig. 3 illustrates the constitution of a centralized loom control system, in a second embodiment, according to

8

the present invention. The second embodiment is effectively applicable to controlling a further increased number of looms 13.

In this embodiment, a relaying CPU 17 is provided in a data bus 5 interconnecting a host CPU 1 and a plurality of communication control CPUs 3 for a plurality of groups of looms. Each relaying CPU 17 is connected to a memory 18.

The host CPU 1 gives control data for specific looms 13 to the relaying CPUs 17. Then, the relaying CPU 17 stores the data including, for example, loom numbers such as "11", "12", ... and "1n" in the associated memory 18. Thereafter, the relaying CPU 17 transmits the data to the communication control CPUs 3 for the looms 13 corresponding to the loom numbers. While one of the relaying CPUs 17 is transmitting the data to the associated communication control CPUs 3, the host CPU 1 is connected to another relaying CPU 17 to give data for the looms 13 associated with the pertinent relaying CPU 17.

When the relaying CPUs 17 are thus provided in the centralized loom control system, the host CPU 1 is required to scan sequentially only the relaying CPUs 17 of a number far smaller than that of the looms 13, and hence the scanning cycle time of the host CPU 1 is reduced greatly as compared with the scanning cycle time necessary for sequentially scanning the individual looms 13. Furthermore, while the host CPU 1 is communicating with

9

one of the relaying CPUs 17, the rest of the relaying CPUs 17 receive instruction request signals from the associated looms 13. Therefore, when selected, each relaying CPU 17 is able to give the instruction request data immediately to the host CPU 1. Accordingly, the delay of the response of the host CPU 1 to the request of the looms 13 is reduced to the least extent.

In a practical weaving mill, on some occasion, only a test loom among all the operational looms is required to be operated while the rest of the looms are stopped. The centralized loom control system is capable of quickly coping with such an occasion. On such an occasion, the host CPU 1 gives the loom code of a loom to be operated and the loom codes of the rest of the looms to be held idle to the relaying CPUs 17, and the relaying CPUs 17 give a stop signal to be associated looms.

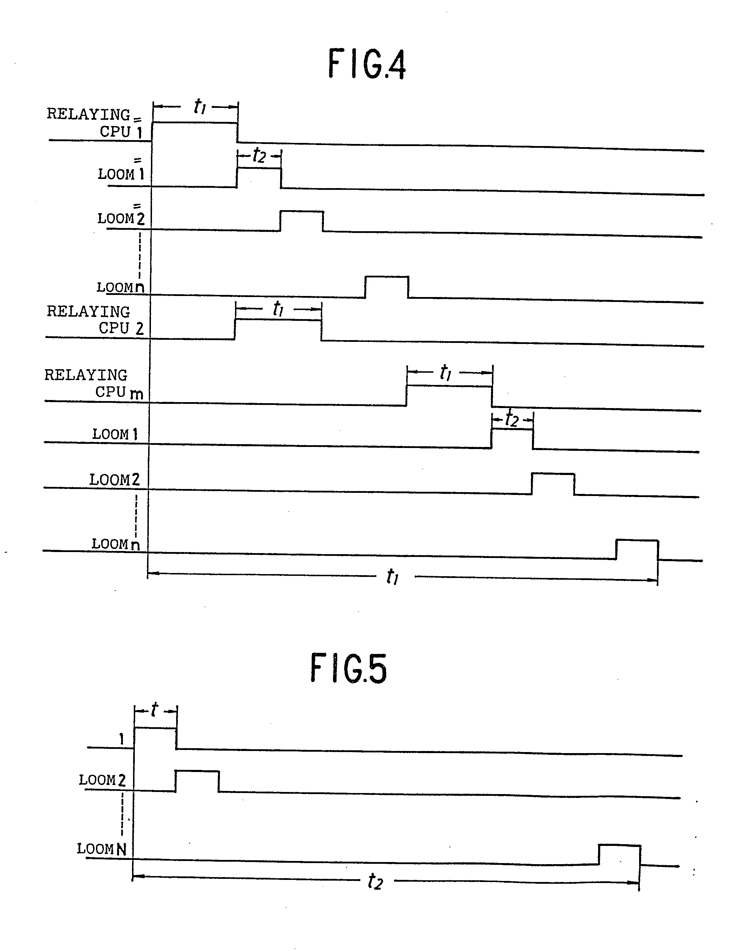

Fig. 4 is a time chart showing the manner of data transmission in the centralized loom control system of Fig. 3. Suppose that the number of the realying 17 is CPUs is "m", the number of the communication control CPUs is "n" and the number of the looms 13 is "N" ($N = m \times m$). In Fig. 4, $t_1$ is a time necessary for transmitting data from the host CPU 1 to each relaying each relaying CPU 17 and $t_2$ is a data transmission time necessary for transmitting data from the relaying CPU 17 to each loom 13. In the time $t_1$, the data is transmitted to n communication control CPUs 3, and hence $t_1 > t_2$. As

10

apparent from the time chart, a time $T_1$ necessary for transmitting data to all the N looms 13 is expressed by $T_1$ = m $t_1$ + n $t_2$. When m = 20, n = 20, N = 400, $t_1$ = 4 sec and $t_2$ = 2 sec, $T_1$ = 120 sec.

Fig. 5 is a time chart showing the manner of data transmission in a conventional centralized loom control system, in which $T_2$ = N t, where $T_2$ is a time necessary for transmitting data to all the looms controlled by the system, N is the number of the looms controlled by the system and t is a time necessary for transmitting data from the host CPU to each loom. Therefor, $T_2$ = 800 sec, when N = 400 and t = 2 sec.

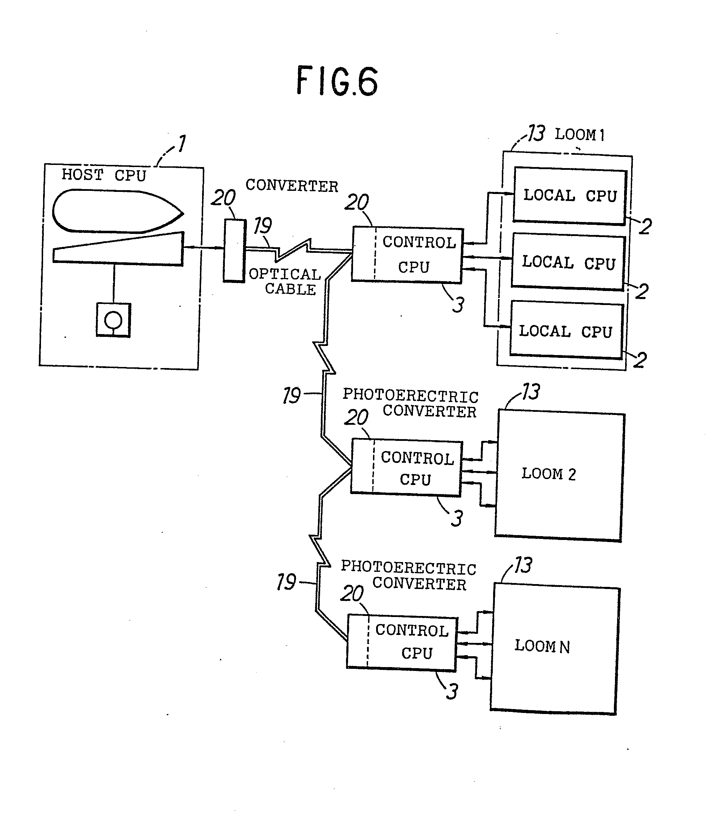

Fig. 6 shows the constitution of a centralized loom control system, in a third embodiment, according to the present invention, in which light communication techniques are employed. In this embodiment, a host CPU 1 provides various data in the form of light signals through a photoelectric converter 20 on an optical cable 19 interconnecting the host CPU 1 and a plurality of communication control CPUs 3.

Generally, the use of wire cables as a data bus requires long wire cables, a potential difference is likely to be produced between the earth circuits when an increased number of peripheral equipments are provided, and the circuits are liable to be affected by noises, hence high-speed data transmission is impossible, whereas the light communication system is able to insulate the

11

earth circuits and to improve the noise-proof capacity. Accordingly, the light communication system is capable of highly reliable and hig-speed transmission of a large quantity of data.

In the third embodiment shown in Fig. 6, the data bus 5 of the second embodiment shown in Fig. 1 is replaced by an optical cable. The host CPU 1, the relaying CPUs 17 and the communication control CPUs 3 of the second embodiment shown in Fig. 3 may be interconnected with optical cables.

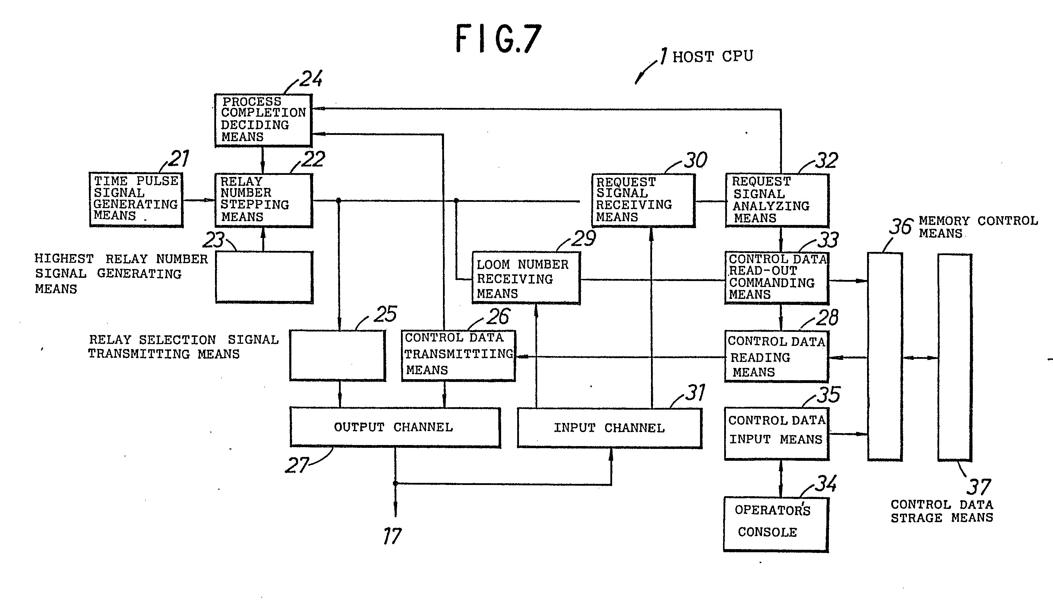

Fig. 7 is a block diagram showing the details of the host CPU 1 of the second embodiment of the present invention shown in Fig. 3. Referring to Fig. 7, relay number stepping means 22 receives a time pluse signal from time pulse signal generating means 21 and signals from highest relay number signal generating means 23 and process completion deciding means 24, and then the relay number stepping means 22 produces signals for the sequential selection of the relay CPUs 17. Relay selection signal transmitting means 25 transmits signals to select the relay CPUs 17 through an output channel 27. Control data transmitting means 26 transmits the control data read by control data reading means 28 through the output channel 27 to the relay CPUs 17. Loom number receiving means 29 and request signal receiving means 30 receive loom number signals and request signals transmitted through an input channel 31 from the relay

12

CPUs 17, respectively.  Request signal analyzing means 32 analyzes the request signal received by the request signal receiving means 30, and then the request signal analyzing means 32 gives an output signal to the process completion deciding means 24 or to control data read-out commanding means 33  on the ground of the result of the analysis. Various control data are given through control data input means 35 and memory control 36 to control data storage means 37 and, if necessary, correction and/or display is made by means of an operator's console 34.  The memory control means 36 reads the necessary control data from the control data storagae means 37 according to the signal given thereto from the control data read-out commanding means 33 and gives the read control data to the control data read-out means 28.

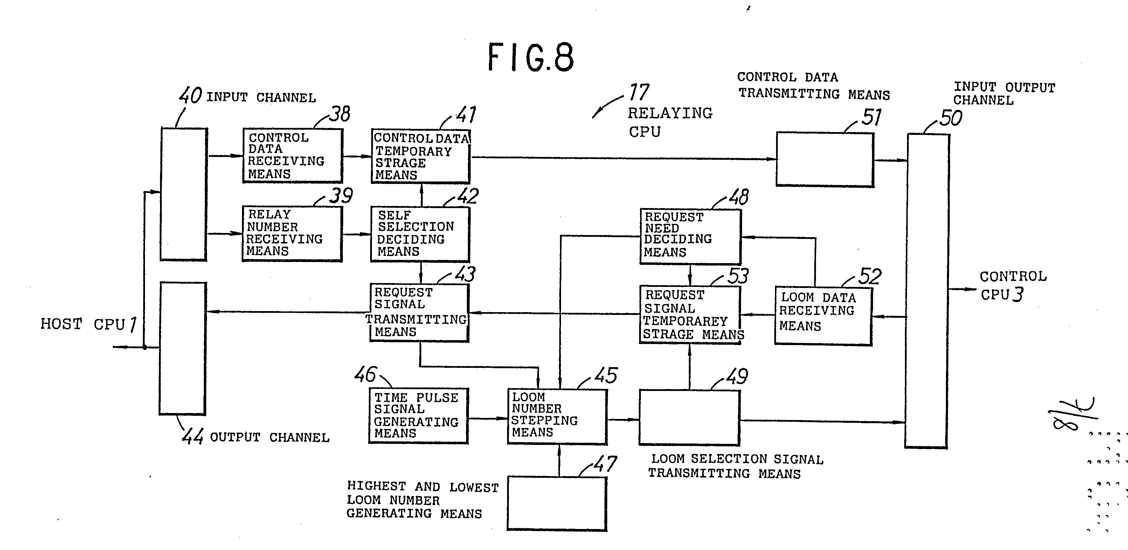

Fig. 8 is a block diagram showing the details of the relay CPU 17 of the second embodiment of the present invention shown in Fig. 3.  Referring to Fig. 8, the host CPU 1 transmits control data and relay number signals through an input channel 40 to control data receiving means 38 and relay number receiving means 39.  Control data temporary storage means 41 corresponds to the memory 18 of the second embodiment shown in Fig. 3.  When the relay CPU 17 is selected by self selection deciding means 42, the control data temporary storage means 41 stores the control data temporarily, while request signal transmitting means 43 transmits the request signal through an output channel 44 to the host CPU 1. Loom number stepping means 45 receives signals from time pulse signal generating means 46, highest and lowest loom number generating means 47, request need deciding means 48 and request signal transmitting means 43, and produces a loom selection signal. Loom selection signal transmitting means 49 transmits the loom selection signal through an input-output channel 50 to the communcation control CPU 3. Control data transmitting means 51 transmits the control data stored in the control data temporry storage means 41 sequentially through the input-output channel 50 and the communication control CPU 3 to the loom 13. Loom data receiving means 52 receives loom data from the loom 13 through the communication control CPU 3 and the input-output channel 50. Request signal temporary storage means 53 corresponds to the memory 18 of the second embodiment shown in Fig. 3. The request signal received by the loom data receiving means 52 is stored temporarily in the request signal temporary storage means 53. The request need deciding means 48 controls the request signal temporary storage means 53.

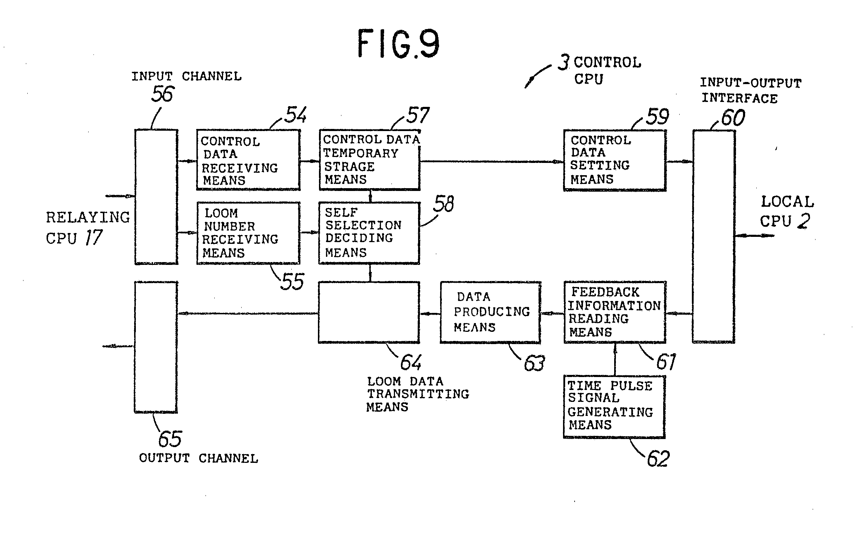

Fig. 9 is a block diagram showing the details of the communication control CPU 3 of the second embodiment of the present invention shown in Fig. 3. Referring to Fig. 9, control data receiving means 54 and loom number receiving means 55 receive control data and loom number signals, respectively, from the relay CPU 17 through an

14

input channel 56. Control data temporary storage means 57 corresponds to the memory 4 of the second embodiment shown in Fig. 3. The control data temporary stroage means 57 stores temporarily the received control data, when the associated communication control CPU 3 is selected by self selection deciding menas 58. The control data stored in the control data temporary storage means 57 is transmitted sequentially through control data setting means 59 and an input-output interface 60 to the local CPU 2. Feedback information reading means 61 receives a time pulse signal from time pulse signal generating means 62, reads the feedback information given thereto through the input-output interface 60 from the local CPU 2, and transmits the feedback information to loom data producing means 63. Loom data transmitting means 64 transmits loom data through an output channel 65 to the relay CPU 17 when the accociated loom is selected by a signal provided by the self selection deciding means 58.

Although the invention has been described with reference to the preferred embodiment thereof with a certain degree of particularity, it is to be understood that many changes and variations are possible in the invention departing from the scope and spirit thereof.

The features disclosed in the foregoing description, in the claims and/or in the accompanying drawings may, both separately and in any combination thereof, be material for realising the invention in diverse forms thereof.

15

0196677

1. A centralized loom control system for controlling a group of looms (13), which comprises: a host CPU (1); a plurality of local CPUs (2) provided on each looms (13) to control the operation of the associated loom (13); a plurality of communication control CPUs (3) each prvided on a data bus (5) interconnecting the host CPU (1) and the local CPUs (2) provided on each loom (13) to exchange data with both the host CPU (1) and the associated local CPUs (2); and a memory (4) connected to each communication control CPU (3) to store temporarily the data given to the associated communication control CPU from the host CPU (3) and from the associated local CPUs (2).

2. A centralized loom control system according to Claim 1, wherein the data given from the host CPU (1) to the communcation control CPUs (3) are target values for controlling the looms (13), and the communication control CPUs (3) give the target values given thereto to the asociated local CPUs (2) to control the operation of the associated looms (13), respectively.

3. A centralized loom control system according to Claim 1 or 2, wherein said data are transmitted bidirectionally between the host CPU (1) and the communication control CPUs (3) through light communication means.

4. A centralized loom control system for controlling

16.

a plurality of groups of looms (13) characterized in comprising a host CPU (1); a plurality of local CPUs (2) provided on each loom (13) to control the operation of the associated loom (13); a plurality of communication control CPUs (3) each connected to the local CPUs (2) provided on each loom (13); a memory (4) connected to each communication control CPU (3) to store temporarily the data give to the associated communication control CPU (3); relay CPUs (17) each provided on a data bus (5) interconnecting the host CPU (1) and the communication control CPUs (3) of each group of looms to exchange data with both the host CPU (1) and the associated communication control CPUs (3); and a memory (17) connected to each relay CPU (17) to store temporarily the data given to the associated relay CPU (1) from the host CPU and from the associated communication control CPUs (3).

5. A centralized loom control system according to Claim 4, wherein the data is transmitted bidirectionally through light communication means between the host CPU (1) and the relay CPUs (17) and between the relay CPUs (17) and the associated communication control CPUs (3).

17

FIG.1

0196677

1/8

FIG.2

2/8

0196677

# FIG.3

4/8

# FIG.4

# FIG.5

# FIG.6

HOST CPU _1_

CONVERTER

_20_

_19_

OPTICAL CABLE

CONTROL CPU _20_

_3_

_13_ LOOM 1

LOCAL CPU _2_

LOCAL CPU _2_

LOCAL CPU _2_

_19_

PHOTOERECTRIC CONVERTER

_20_

CONTROL CPU

_13_

LOOM 2

_3_

_19_

PHOTOERECTRIC CONVERTER

_20_

CONTROL CPU

_13_

LOOM N

_3_

# FIG.7

1 HOST CPU

24 PROCESS COMPLETION DECIDING MEANS

21 TIME PULSE SIGNAL GENERATING MEANS

22 RELAY NUMBER STEPPING MEANS

23 HIGHEST RELAY NUMBER SIGNAL GENERATING MEANS

30 REQUEST SIGNAL RECEIVING MEANS

32 REQUEST SIGNAL ANALYZING MEANS

36 MEMORY CONTROL MEANS

29 LOOM NUMBER RECEIVING MEANS

33 CONTROL DATA READ-OUT COMMANDING MEANS

25 RELAY SELECTION SIGNAL TRANSMITTING MEANS

26 CONTROL DATA TRANSMITTIING MEANS

28 CONTROL DATA READING MEANS

OUTPUT CHANNEL

27

INPUT CHANNEL

31

35 CONTROL DATA INPUT MEANS

17

34 OPERATOR'S CONSOLE

37 CONTROL DATA STRAGE MEANS

# FIG.8

HOST CPU 1

40 INPUT CHANNEL

38 CONTROL DATA RECEIVING MEANS

39 RELAY NUMBER RECEIVING MEANS

41 CONTROL DATA TEMPORARY STRAGE MEANS

42 SELF SELECTION DECIDING MEANS

43 REQUEST SIGNAL TRANSMITTING MEANS

44 OUTPUT CHANNEL

46 TIME PULSE SIGNAL GENERATING MEANS

45 LOOM NUMBER STEPPING MEANS

47 HIGHEST AND LOWEST LOOM NUMBER GENERATING MEANS

17 RELAYING CPU

CONTROL DATA TRANSMITTING MEANS

48 REQUEST NEED DECIDING MEANS

53 REQUEST SIGNAL TEMPORAREY STRAGE MEANS

52 LOOM DATA RECEIVING MEANS

49 LOOM SELECTION SIGNAL TRANSMITTING MEANS

51

50 INPUT OUTPUT CHANNEL

CONTROL CPU 3

# FIG.9

INPUT CHANNEL

**56**

*3* CONTROL CPU

INPUT-OUTPUT INTERFACE

**54**

**57**

**59**

**60**

RELAYING CPU *17*

| CONTROL DATA RECEIVING MEANS | CONTROL DATA TEMPORARY STRAGE MEANS | CONTROL DATA SETTING MEANS |

| LOOM NUMBER RECEIVING MEANS | SELF SELECTION DECIDING MEANS |

LOCAL CPU *2*

**58**

**55**

LOOM DATA TRANSMITTING MEANS

**64**

DATA PRODUCING MEANS

**63**

FEEDBACK INFORMATION READING MEANS

**61**

TIME PULSE SIGNAL GENERATING MEANS

**62**

**65**

OUTPUT CHANNEL